# FASCICULE DE BREVET EUROPEEN

(11) **EP 2 991 478 B1**
(45) Date de publication et mention de la délivrance du brevet: **29.03.2017**
(21) Numéro de dépôt: 14708187.1
(22) Date de dépôt: 24.02.2014
(51) Int. Cl.: A01L 3/04, A01L 5/00, A01L 1/04

(54) **FER A EQUIDE FLEXIBLE ET PROCEDE DE FABRICATION**
FLEXIBLES HUFEISEN UND VERFAHREN ZUR HERSTELLUNG
FLEXIBLE HORSESHOE AND METHOD OF MANUFACTURING

(30) Priorité: 29.04.2013 CH 8822013
(43) Date de publication de la demande: 09.03.2016
(73) Titulaire: BASIC, Elif, 2068 Hauterive (CH)
(72) Inventeur: BASIC, Elif, 2068 Hauterive (CH)
(74) Mandataire: P&TS SA (AG, Ltd.)
(86) Numéro de dépôt international: PCT/CH2014/000024
(87) Numéro de publication internationale: WO 2014/176705

(56) Documents cités:
- DE-A1- 3 414 458
- GB-A- 191 010 796
- US-A- 3 861 472

## Description

L'invention concerne un fer à équidé. Ce peut être, notamment, un fer à cheval.

L'invention a trait également à un procédé de fabrication de ce fer.

### Arrière-plan de l'invention

Le fer à cheval est une bande de métal recourbée en U servant à protéger de l'usure le dessous des sabots des équidés.

L'origine du fer à cheval est très controversée, on admet que le fer est une invention due aux Gaulois et même aux Celtes avant eux. La Grèce antique n'a jamais connu le fer à cheval ainsi que le prouvent leur absence dans les sculptures des chevaux du Parthénon. 500 ans av JC des écrits regroupés en quelques ouvrages grecs sur le cheval porte l'accent sur la nécessité d'endurcir le sabot et parlent de embataï, sorte de sandale en cuir lacée au pied de certains chevaux. Les auteurs romains n'ont décrit que des hipposandales, des chaussures en fer attachées et non clouées au pied du cheval par une courroie serrée au paturon. Ce qui n'est pas contesté c'est qu'un fer proche du fer gaulois, fer cloué, c'est multiplié et vulgarisé à l'époque Gallo-Romaine puis avec les Francs et les Mérovingiens.

Par la suite, le fer prend le type *Crécy* qui évoluera peu jusqu'au XV^{ème} siècle.

Au XVI^{ème} siècle le pinçon apparaît timidement et le cheval est encore ferré à froid.

Au XVIII^{ème} est mis au point le fer tel que nous le connaissons aujourd'hui.

Au XX^{ème} siècle, l'essor de l'industrie métallurgique va apporter la possibilité d'utiliser des métaux plus légers ou plus adapté au travail de chevaux et ainsi participer à la faveur de l'équitation de sport et de loisir.

Dans les pays arabes notamment en Egypte les ânes et les mules étaient parfois ferrés.

Il existe de nombreux documents techniques relatifs au fer à cheval. Parmi ceux-ci, l'un des plus récents, la demande internationale de brevet publiée sous le numéro WO2004/023871 décrit, en relation avec ses figures 2 et 3, un fer à cheval ayant une structure composite formée de trois couches, à savoir, une couche supérieure en polyuréthane, une couche centrale en alliage d'aluminium et une couche inférieure en polyuréthane (cf. page 4, lignes 13 à 23).

Le document DE3414458A1 présente un fer à équidé comportant deux couches superposées, dont une couche inférieure en un matériau rigide destinée à entrer en contact avec le sol et une couche supérieure en un matériau élastomère. Le document GB10796A concerne un fer à équidé présentant sur la face interne de ses parois montantes des nervures pour améliorer l'accroche sur le sabot.

Le problème principal posé par les fers à cheval connus jusqu'à ce jour est qu'ils entravent la dynamique du pied du cheval.

### Exposé sommaire de l'invention

L'invention a pour but de proposer un fer à équidé qui soit avant toute chose respectueux de l'intégrité de la biomécanique, tout en protégeant de l'usure, peu épais, amortissant, léger, confortable pour l'animal qui le porte, peu coûteux, simple à fabriquer et facile à fixer sur un sabot d'un animal.
Selon l'invention, ce but est atteint par un fer à équidé selon la revendication 1. Ce fer à équidé a l'avantage remarquable de conserver au pied du cheval toute sa dynamique. En effet, il présente une élasticité qui ne nuit pas à ce que les spécialistes appellent « le phénomène de pompe » donc permet une continuité quasi naturelle de la mécanique tout en assurant l'intégrité de la paroi du pied du cheval.
Ce fer à équidé a notamment aussi l'avantage par sa composition hybride de réduire la masse de 50% engendrant beaucoup moins d'effort sur les articulations distales du cheval.

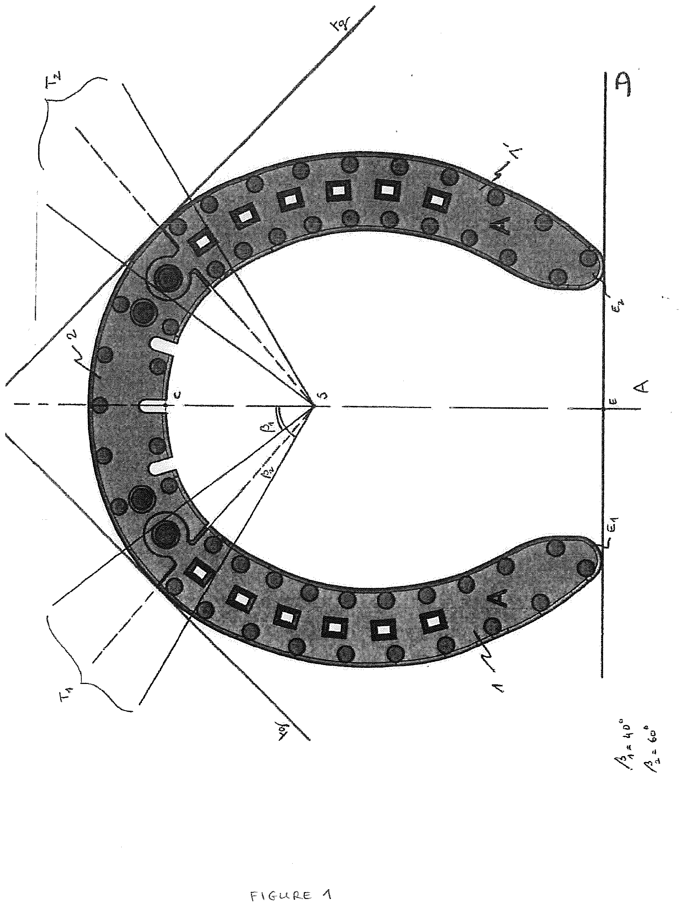

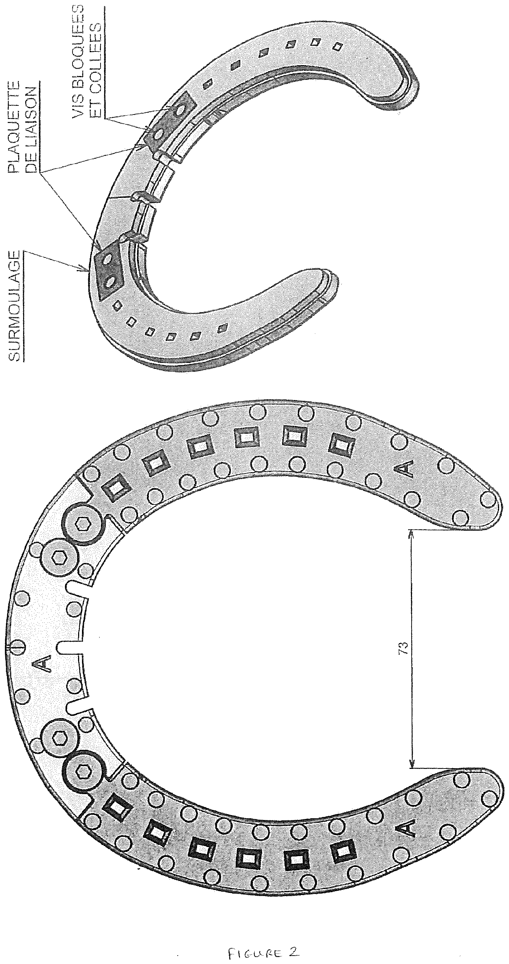

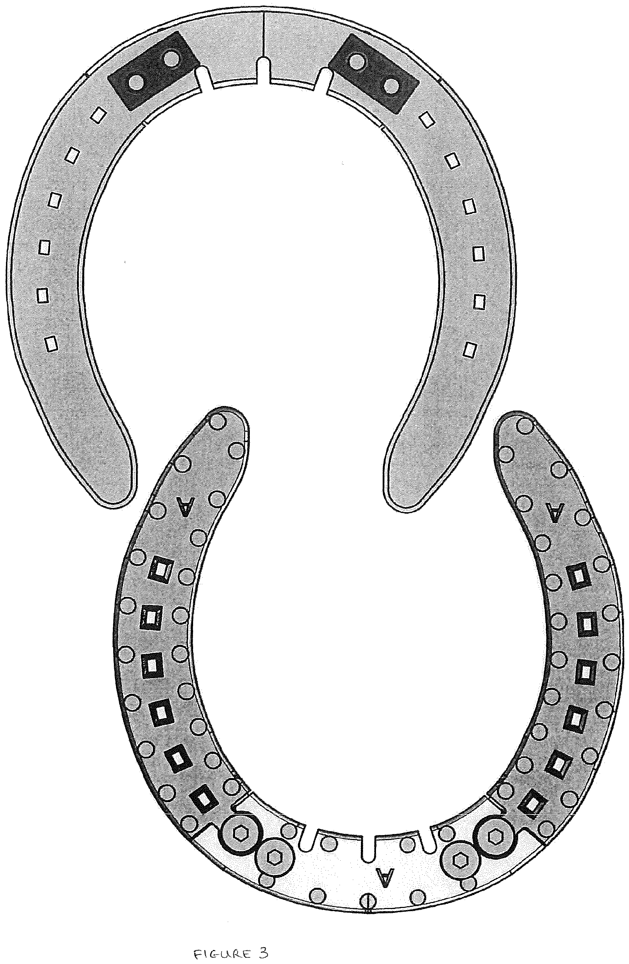

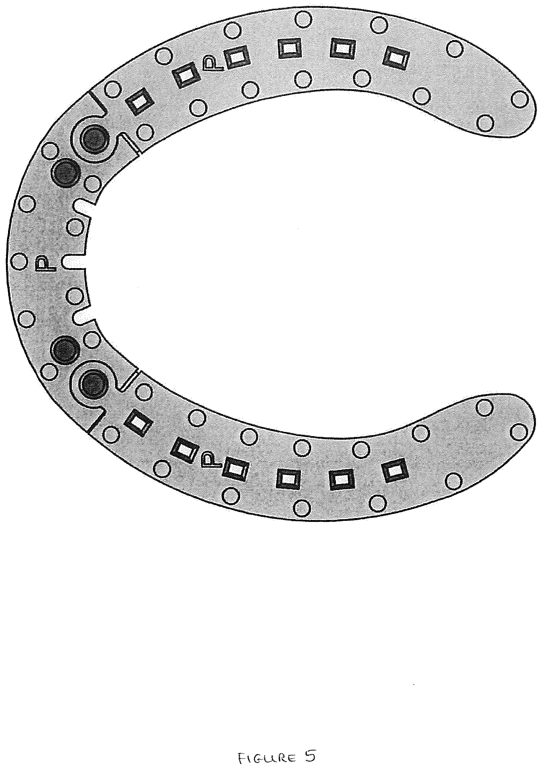

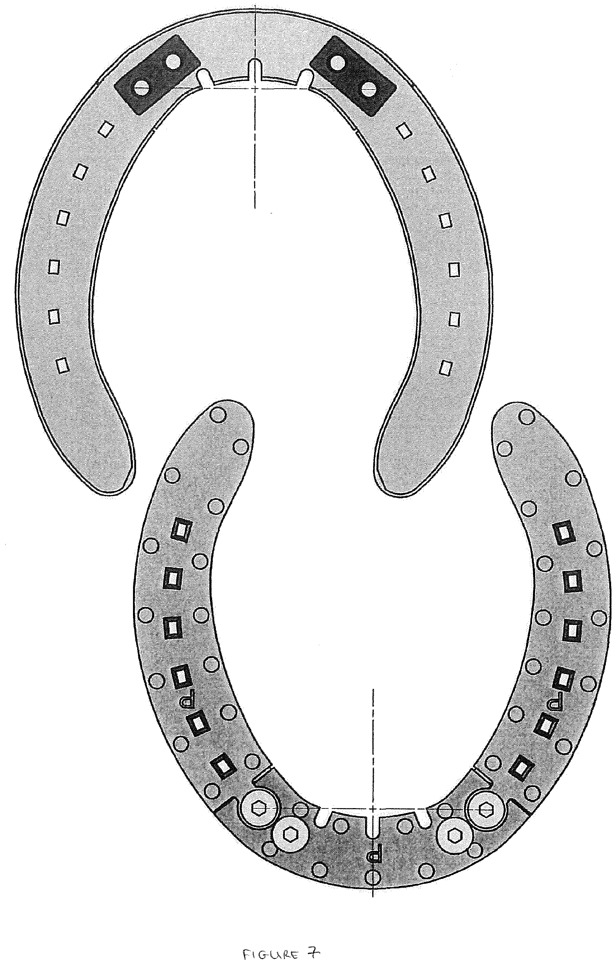

L'invention concerne également un procédé de fabrication d'un tel fer, comprenant les étapes suivantes :
- on découpe dans une plaque de matériau rigide trois inserts constituant la partie inférieure du fer à équidé, ces inserts ayant des formes différentes, voir les figures 1 et 5, et sensiblement la même épaisseur
- on surmoule les inserts en injectant la couche supérieure en matériau élastomère, cette couche ayant sensiblement la même forme et recouvrant la totalité des inserts de la partie inférieure mais en général une épaisseur sensiblement différente en comparaison de celle des inserts de la partie inférieure, voir les figures 2, 3, 6 et 7

D'autres caractéristiques et avantages de l'invention vont maintenant être décrits en détail dans l'exposé suivant et qui est donné en référence aux figures annexées qui représentent schématiquement :
- *figure 1* *: un fer à équidé selon l'invention de la forme du sabot antérieur, en vue de dessous*
- *figure 2* *: un fer à équidé selon l'invention de la forme du sabot antérieur, en vue de dessous et de % en 3D de la partie élastomère*
- *figure 3* *: un fer à équidé selon l'invention de la forme du sabot antérieur, en vue de dessous et en vue de dessus*
- *figure 4* *: un fer à équidé selon l'invention de la forme du sabot antérieur, en position fermée, en vue de dessous, en coupe et la charnière du fer en coupe*
- *figure 5* *: un fer à équidé selon l'invention de la forme du sabot postérieur, en vue de dessous*
- *figure 6* *: un fer à équidé selon l'invention de la forme du sabot postérieur, en vue de dessous et de % en 3D de la partie élastomère*
- *figure 7* *: un fer à équidé selon l'invention de la forme du sabot postérieur, en vue de dessous et en vue de dessus*
- *figure 8* *: un fer à équidé selon l'invention de la forme du sabot postérieur, en position fermée, en vue de dessous, en coupe et la charnière du fer en coupe*

### Exposé détaillé de l'invention

Un exemple de réalisation du fer à équidé selon l'invention va maintenant être donné à titre illustratif et non limitatif.

Sur les figures 1 et 5, le fer à équidé selon l'invention présente la forme d'un fer à cheval c'est-à-dire qu'il est sensiblement en forme de U.

Ce fer à cheval comporte trois parties, deux latérales symétriques par rapport à l'axe de symétrie A et une centrale.

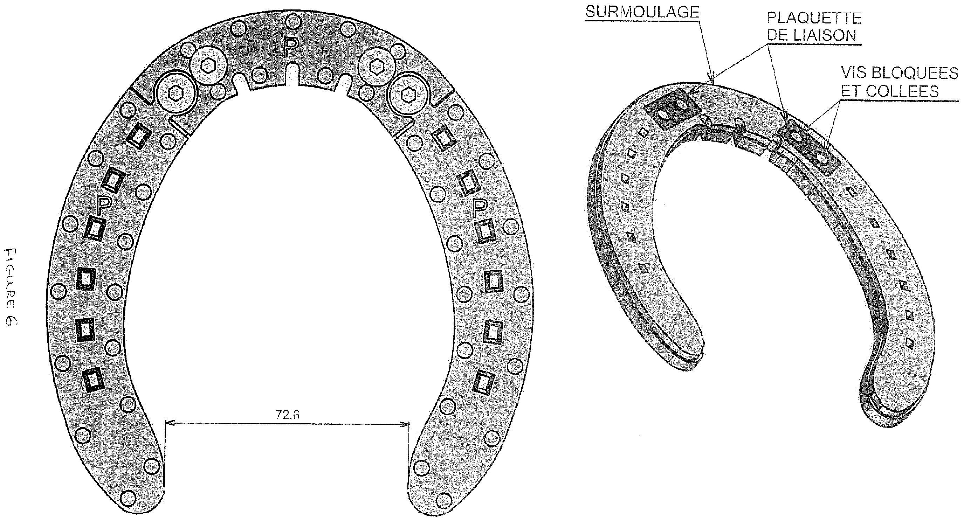

Comme on peut le voir sur les figures 2 et 6, le fer à cheval comporte au moins deux couches superposées à savoir :
▪ une couche supérieure en un matériau élastomère teinté rouge, ou autre couleur potentiellement fluorescente, dont une face granuleuse, élaborée de manière à assurer un parfait contact avec le sabot d'un animal
▪ une couche inférieure en un matériau rigide destiné à entrer en contact avec le sol
▪ au moins trois échancrures sur la partie rigide en partie inférieure et ventrale : la première sur l'axe de symétrie A, la deuxième et la troisième symétriquement perpendiculaire par rapport à l'axe de tangente du fer et selon un angle β1 et β2 équivalent situé entre 40 et 60 degrés par rapport à l'axe de symétrie du fer

Ainsi le matériau rigide apporte la solidité et durée de vie, et le matériau élastomère produit un effet d'élasticité et d'amortissement des vibrations et d'isolation en termes de conductibilité de la chaleur (dû à la friction de la partie rigide sur le sol).

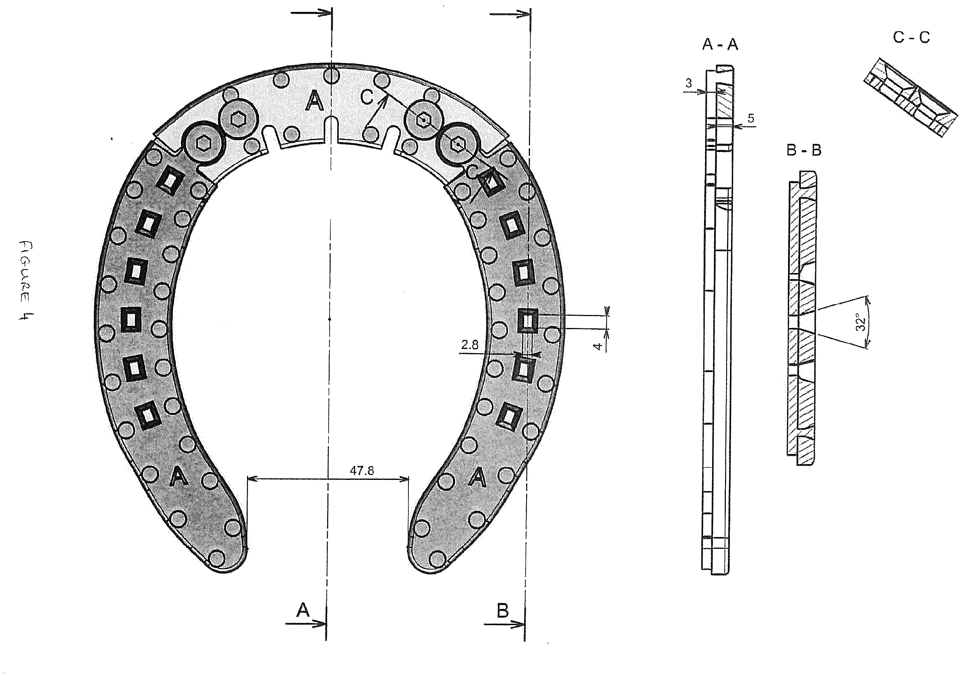

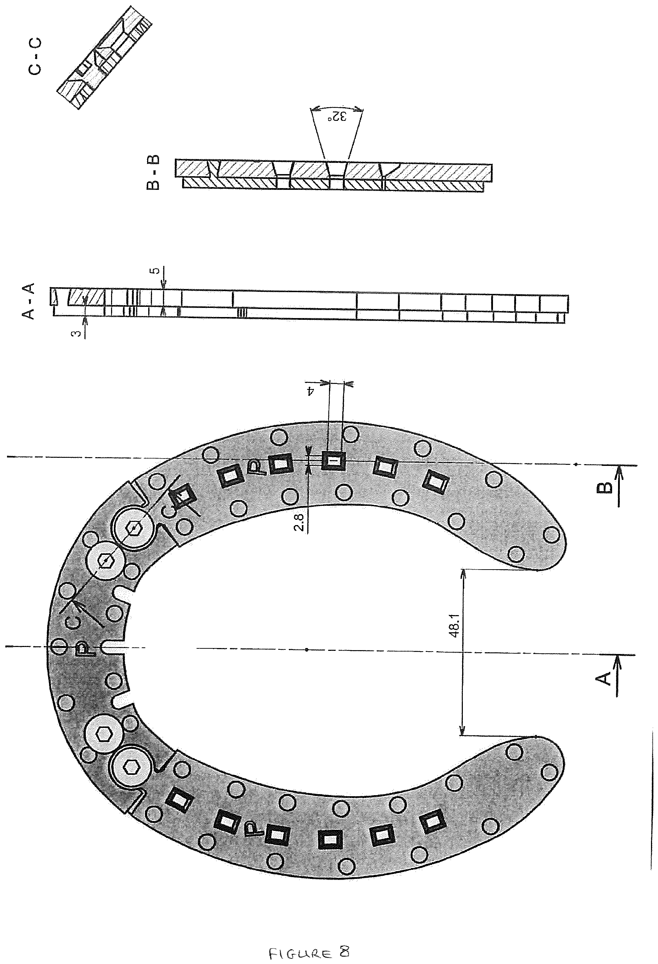

Selon un mode de réalisation avantageux de l'invention visible sur la figure 1, la couche inférieure se composant de deux parties latérales jointes à la partie centrale par une charnière (voir figures 4 et 8). Son axe peut supporter un poids important conférant au fer à équidé un mouvement latéral tout en permettant de conserver une parfaite intégrité de la paroi. Cet écartement des parties latérales 1 et 1' l'une par rapport à l'autre de façon symétrique par rapport à l'axe central du fer est d'au moins 0.5 cm par rapport à l'axe de symétrie A pour chacune des parties latérales 1 et 1', respectant de façon innovante le mouvement naturel d'écartement du pied du cheval.

Revenant sur les figures 4 et 8 en vision de coupe de la charnière, on peut voir qu'il est préférable qu'elle est cette forme afin d'assurer une parfaite tenue dans le temps, conservant avec l'usure progressive de la partie inférieure rigide au contact avec le sol, l'intégrité du mécanisme et afin de ne pas provoquer un effet d'arrachement des parties latérales 1 et 1' avec la partie centrale 2. De plus, il est souhaitable que ces deux charnières regroupant les parties latérales 1 et 1' à la partie centrale 2 soient positionnées de façon symétrique par rapport à l'axe symétrie A du fer et sensiblement perpendiculaires à la tangente de la périphérie du fer. Selon une version avantageuse de l'invention visible sur la figure 4, les deux charnières sont comprises dans des segments T1 et T2 du fer formée par la zone commune aux angles β1 et β2. Ces angles sont formés à partir de l'axe de symétrie A du côté du point C situé à l'intersection de l'axe de symétrie A et de la périphérie intérieur du fer et ils ont pour sommet commun le point S situé à mi-distance entre le point C et le point E situé à l'intersection de l'axe de symétrie A et de la droite D reliant les extrémités E1 et E2 des parties du fer.

Les angles β1 et β2 sont généralement de 40 et 60 degrés et de préférence de 50 degrés.

La couche supérieure en élastomère adhère à la partie inférieure par un procédé d'injection dans des trous préalablement effectués dans la partie inférieure voir sur les figures 4 et 8. Le rôle de cette couche étant d'assurer l'élasticité du mouvement de la charnière respectant de façon biotechnologique le mouvement du pied.

A titre d'exemple, la couche supérieure élastomère peut avoir une épaisseur comprise généralement entre 3 et 5 mm de la base au sommet de la granulation. Elle est de préférence d'environ 4 mm.

La couche inférieure peut avoir une épaisseur comprise de 3 à 6 mm, elle est de préférence d'environ 5 mm.

Il apparaît donc que le fer à équidé selon l'invention présente une faible épaisseur, puisque celle-ci reste généralement inférieure à 1 cm. Ceci est particulièrement intéressant car lorsque l'épaisseur est faible, le phénomène de pompe peut avoir lieu. En effet, on observe actuellement dans le domaine du sport hippique, plus particulièrement des courses, une tendance qui consiste à déferrer les chevaux afin de rendre aux pieds de ces derniers toute leur dynamique donc une meilleure performance.

En ce qui concerne les matériaux constituant le fer à équidé selon l'invention, la couche inférieure peut être tout matériau rigide approprié, par exemple, un métal, comme le fer, le titane ou l'aluminium ou un alliage métallique, tel que l'acier ou un alliage aluminium.

Le matériau constituant la couche supérieure peut être tout matériau thermoplastique approprié comme exemple on peut citer les polyuréthanes. Selon un mode avantageux de l'invention, le fer à équidé comporte sur la couche supérieure en élastomère des prolongements appelés pinçons au nombre maximum de 6 voir. Ceux-ci ayant un rôle d'optimisation de la tenue du fer au pied du cheval.

La partie supérieure élastomère comportera également sur la partie dénommée pince un logement permettant d'y insérer un capteur électronique.

### Procédé de fabrication

Pour fabriquer le fer à équidé selon l'invention, on peut procéder de la manière suivante :
- on découpe dans une plaque de matériau rigide trois inserts constituant la partie inférieure du fer à équidé, ces inserts ayant des formes différentes, voir les figures 1 et 5, et sensiblement la même épaisseur
- on surmoule les inserts en injectant la couche supérieure en matériau élastomère, cette couche ayant sensiblement la même forme et recouvrant la totalité des inserts de la partie inférieure mais en général une épaisseur sensiblement différente en comparaison de celle des inserts de la partie inférieure, voir les figures 2, 3, 6 et 7

La fixation est réalisée par tout moyen approprié, par exemple par rivetage ou par collage.

Pour faciliter le rivetage des trous de fixation ou étampures au maximum de 14 sont réalisés sur la partie rigide, voir figures 1 et 5. Les étampures principalement utilisées apparaissent après injection sur la partie supérieure sans remplissage de matériau élastomère.

### Utilisation

Le fer à équidé selon l'invention peut être fixé sur les jambes antérieures et/ou postérieures de l'animal. En principe on fixe un nombre pair de fers, c'est-à-dire soit deux antérieurs, deux postérieurs ou les quatre membres.
La fixation peut se faire de façon connue au moyen de clous introduit dans les trous ou étampures ou par collage à l'aide notamment d'une colle résineuse appropriée ayant l'avantage de respecter au mieux les qualités biomécaniques du pied du cheval.
Le fer à équidé selon l'invention peut être utilisé dans tout événement sportif grâce à sa légèreté, son caractère non contraignant pour l'animal qui le porte. Il permet à ce dernier d'optimiser ses performances tout en protégeant l'intégrité de son pied et de préserver ses qualités naturelles biomécaniques.

## Revendications

1. Fer à équidé, en particulier fer à cheval, comportant au moins deux couches superposées, dont au moins une couche inférieure en un matériau rigide destinée à entrer en contact avec le sol et au moins une couche supérieure en un matériau élastomère, **caractérisé en ce que** :
▪ ladite couche supérieure présente une face granuleuse qui est élaborée de manière à assurer un parfait contact avec le sabot de l'équidé, et
▪ ladite couche inférieure rigide destinée à entrer en contact avec le sol comporte deux charnières disposées symétriquement par rapport à un axe de symétrie (A) et reliant des parties latérales (1, 1') à une partie centrale (2) de la couche inférieure rigide, lesdites charnières étant comprises dans la zone comprise entre deux angles (β1, β2) formés à partir de l'axe de symétrie (A), du côté d'un point (C) situé à l'intersection de l'axe de symétrie (A) et de la périphérie intérieur de la couche inférieure, ces angles (β1, β2) ayant pour sommet commun un point (S) situé à mi-distance entre le point (C) et un point (E) situé à l'intersection de l'axe de symétrie (A) et d'une droite (D) reliant les extrémités (E1, E2) des parties latérales (1,1') du fer, les angles (β1, β2) étant respectivement de 40 et 60 degrés.

2. Fer à équidé selon la revendication 1, dans lequel la couche supérieure en matériau élastomère comporte, sur sa face granuleuse une structure dont la forme adhérente plus particulièrement granuleuse est destinée à améliorer le contact avec le sabot de l'animal ainsi qu'au maximum 6 pinçons disposés symétriquement par rapport à un axe de symétrie (A) également destinés à améliorer le contact avec le sabot de l'équidé.

3. Fer à équidé selon la revendication 1 ou 2, dans lequel la couche inférieure rigide comporte au moins trois échancrures dans la partie intérieure de la partie centrale (2) de la couche inférieure rigide, la première échancrure étant disposée sur l'axe de symétrie A, la deuxième et la troisième échancrures étant disposées symétriquement perpendiculaire par rapport à l'axe de tangente du fer et selon un angle équivalent situé entre 40 et 60 degrés par rapport à l'axe de symétrie (A) du fer.

4. Fer à équidé selon l'une des revendications 1 à 3, dans lequel le matériau rigide est un métal ou un alliage métallique.

5. Fer à équidé selon la revendication 4, dans lequel le matériau rigide est un alliage d'aluminium.

6. Fer à équidé selon l'une des revendications 1 à 5, dans lequel le matériau élastomère est un thermoplastique couvrant la dureté de 40 à 65 SHORE D.

7. Fer à équidé selon l'une des revendications 1 à 6, dans lequel :
▪ la couche supérieure a une épaisseur de 3 à 5 mm ;
▪ la couche inférieure a une épaisseur de 3 à 6 mm.

8. Procédé de fabrication d'un fer à équidé selon l'une des revendications 1 à 7, comprenant les étapes suivantes:
- on découpe dans une plaque de matériau rigide trois inserts constituant la partie inférieure du fer à équidé, ces inserts ayant des formes différentes, et sensiblement la même épaisseur
- on surmoule les inserts en injectant la couche supérieure en matériau élastomère, cette couche ayant sensiblement la même forme et recouvrant la totalité des inserts de la partie inférieure mais une épaisseur sensiblement différente en comparaison de celle des inserts de la partie inférieure.

## Patentansprüche

1. Hufeisen für Huftiere, insbesondere Pferdehufeisen, mit mindestens zwei übereinander angeordneten Schichten, inkl. mindestens einer unteren Schicht aus einem starren Material, dazu bestimmt, in Kontakt mit dem Boden zu kommen, und mindestens einer oberen Schicht aus einem Elastomer-Material, **dadurch gekennzeichnet, dass**:
- die besagte obere Schicht eine körnige Oberfläche aufweist, welche so konzipiert ist, um einen perfekten Kontakt mit dem Huf des Huftieres zu gewährleisten, und
- die besagte untere starre Schicht, welche dazu bestimmt ist, in Kontakt mit dem Boden zu kommen, zwei Scharniere aufweist, welche in Bezug auf eine Symmetrieachse (A) symmetrisch angeordnet sind und die Seitenteile (1,1') mit einem zentralen Teil (2) der unteren starren Schicht verbinden, wobei die besagten Scharniere im Bereich zwischen zwei Winkeln (β1, β2) liegen, welche aus der Symmetrieachse (A) auf der Seite eines Punktes (C) am Schnittpunkt der Symmetrieachse (A) mit der inneren Peripherie der unteren Schicht gebildet sind, wobei diese Winkel (β1, β2) als gemeinsamen Scheitellinien einen Punkt (S) halbwegs zwischen dem Punkt (C) und einem Punkt (E) haben, der am Schnittpunkt der Symmetrieachse (A) und einer die Enden (E1, E2) der Seitenteile (1,1') des Eisens verbindenden Geraden (D) liegt, wobei die Winkel (β1, β2) 40 bzw. 60 Grad betragen.

2. Hufeisen gemäss Anspruch 1, wobei die obere Schicht aus Elastomer-Material auf seiner Oberfläche eine Struktur aufweist, deren haftschlüssige und besonders körnige Form dazu bestimmt ist, den Kontakt mit dem Huf des Tieres zu verbessern, sowie maximal 6 Kappen, welche symmetrisch zu einer Symmetrieachse A angeordnet sind und ebenfalls dazu bestimmt sind, den Kontakt mit dem Huf des Huftieres zu verbessern.

3. Hufeisen gemäss einem der Ansprüche 1 oder 2, worin die untere starre Schicht mindestens drei Ausschnitte im unteren Teil des zentralen Teils (2) der starren unteren Schicht aufweist, wobei der erste Ausschnitt auf der Symmetrieachse A angeordnet ist, wobei der zweite und der dritte Ausschnitt symmetrisch senkrecht in Bezug auf die Tangentenachse des Eisens und gemässe einem gleichwertigen Winkel zwischen 40 und 60 Grad in Bezug auf die Symmetrieachse (A) des Eisens angeordnet sind.

4. Hufeisen gemäss einem der Ansprüche 1 bis 3, worin das starre Material ein Metall oder eine Metalllegierung ist.

5. Hufeisen gemäss Anspruch 4, worin das starre Material eine Aluminiumlegierung ist.

6. Hufeisen gemäss einem der Ansprüche 1 bis 5, worin das Elastomer-Material ein Thermoplastik in einem Härtebereich von 40 bis 65 Shore D ist.

7. Hufeisen gemäss einem der Ansprüche 1 bis 6, worin:
- die obere Schicht eine Dicke von 3 bis 5 mm aufweist;
- die untere Schicht eine Dicke von 3 bis 6 mm aufweist.

8. Verfahren zur Herstellung eines Hufeisens für Huftiere gemäss einem der Ansprüche 1 bis 7, mit den folgenden Schritten:
- drei Einsätze, welche den unteren Teil des Hufeisens bilden, werden aus einer Platte aus starrem Material herausgeschnitten, wobei diese Einsätze verschiedene Formen und im Wesentlichen die gleiche Dicke aufweisen,
- die Einsätze werden angeformt, indem die obere Schicht aus Elastomer-Material injiziert wird, wobei diese Schicht im Wesentlichen die gleiche Form aufweist und die Gesamtheit der Einsätze des unteren Teils überdeckt, jedoch eine signifikant unterschiedliche Dicke im Vergleich zu derjenigen der Einsätze des unteren Teils aufweist.

## Claims

1. Equid shoes, particularly horseshoes, comprising at least two overlapping layers, at least a lower layer made of a rigid material and intended to come into contact with the ground, at least an upper layer of an elastomeric material, **characterized in that**:
▪ said upper layer has a granular surface produced so as to ensure complete contact with the shoe of the equid animal, and
▪ said lower rigid layer intended to come into contact with the ground comprises two hinges arranged symmetrically with respect to a symmetry axis (A) and connecting the lateral parts (1, 1') to a central part (2) of the lower rigid layer, said hinges being included in an area between two angles (β1, β2) with respect to the symmetry axis (A) of the shoe, from the side of a point (C) located at the intersection of the symmetry axis (A) and the inner periphery of the lower layer, these angles (β1, β2) having as a common vertex a point (S) midway between the point (C) and a point (E) located at the intersection of the symmetry axis (A) and a straight line (D) connecting the free ends (E1, E2) of the lateral parts (1, 1') of the shoe, the angles (β1, β2) being 40 degrees and 60 degrees respectively.

2. The equid shoe of claim 1, wherein the top layer of elastomer material has on its granular surface a structure with an adherent shape more particularly granular is intended to improve contact with the animal's hoof and a maximum of 6 toe clips arranged symmetrically with respect to symmetry axis (A) also intended to improve contact with the hoof of the equid.

3. The equid shoe of claim 1 or 2, wherein the lower rigid layer comprises at least three indentations in the inner edge of the central part (2) of the lower rigid layer, the first indentation being arranged on the symmetry axis (A), the second and third indentations being symmetrically and orthogonally arranged with respect to the tangent axis of the shoe and with an equivalent angle arranged between 40 and 60 degrees with respect to the symmetry axis (A).

4. The equid shoe of anyone of claims 1 to 3, wherein the rigid material is a pure metal or a metal alloy.

5. The equid shoe of claim 4, wherein the rigid material is an aluminium alloy.

6. The equid shoe of anyone of claims 1 to 5, wherein the elastomeric material is a thermoplastic having a hardness in a range from 40 SHORE D to 65 SHORE D.

7. The equid shoe of anyone of claims 1 to 6, wherein:
▪ the upper layer has a thickness of 3 mm to 5 mm;
▪ the lower layer has a thickness of 3 mm to 6 mm.

8. A manufacturing process for an equid shoe in accordance with anyone of claims 1 to 7, comprising the following stages:
- three inserts constituting the lower part of the equid shoe are cut in a sheet of rigid material, these inserts having different shapes and substantially the same thickness,
- the inserts are over-moulded by injecting the upper layer with elastomeric material, with this layer having substantially the same shape, and covering the entirety of the inserts of the lower part but having a substantially different thickness in comparison with that of the inserts of the lower part.
